# EUROPEAN PATENT SPECIFICATION

(11) **EP 1 696 640 B1**
(45) Date of publication and mention of the grant of the patent: **11.04.2007**
(21) Application number: 05101045.2
(22) Date of filing: 11.02.2005
(51) Int. Cl.: H04M 1/04, H04B 1/38, G06F 1/16

(54) **Ergonomic clip for a mobile communication device**
Ergonomische Halterungsklemme für ein mobiles Kommunikationsgerät
Clip ergonomique pour un appareil de communication mobile

(43) Date of publication of application: 30.08.2006
(73) Proprietor: Research In Motion Limited, Waterloo, Ontario N2L 3W8 (CA)
(72) Inventor: Ladouceur, Norman N., Waterloo, Ontario N2T 1A2 (CA)
(74) Representative: Rickard, David John

(56) References cited:
- WO-A-20/04014052
- US-A- 4 083 481
- US-A- 4 828 153
- US-A1- 2003 148 787

## Description

The invention relates generally to mobile communication devices. More particularly, the invention relates to an ergonomic clip for a mobile communication device.

Mobile communication device use has been growing in the past few years. Many individuals are now using devices such as cellular telephones and/or personal digital assistants with email capabilities to communicate with other individuals. Individuals may now be contacted by others no matter the distance between the individuals.

When the mobile communication device is not in use, individuals may simply place the phone in a pocket or purse in order to carry them around. However, some individuals attach their mobile communication device to a holster which is clipped to the individual's belt for storage. Other mobile communication devices include a clip on the back of its case so that an individual may directly attach or clip the mobile communication device to their belt or pocket.

In many of the mobile communication devices, where the clip is attached to the back of the device, when the individual uses the device, they are required to grip the entire device who's circumference is now larger due to the presence of the clip. This is quite inconvenient for individuals with small hands and generally requires the individual to use two hands to operate the mobile communication device. Furthermore, this may also be quite cumbersome for individuals who are experiencing arthritis in their hands and therefore may have trouble gripping the mobile communication device.

US-A-4 828 153 discloses a clip for a mobile communication device allowing the device to be clipped to the belt of a user

It is, therefore, desirable to provide a novel clip for a mobile communication device.

The invention may obviate or mitigate at least one disadvantage of previous clips for mobile communication devices.

### GENERAL

In a first aspect, there is provided a clip (10, 22, 30, 40, 50, 60) for a mobile communication device for facilitating one-handed handling of said mobile communication device by a user, comprising: an attachment portion (14, 28, 32 42) securable to said device; and an elongate portion (16, 24, 26, 34, 44), at least part of which defines a plane, comprising a distal end, remote from said attachment portion, and an operational section extending between the attachment portion and the distal end, and opposing a first surface of the device; wherein, in a resting position, the said plane of said elongate portion extends substantially parallel to or is inclined toward the said first surface of the device; wherein, in a receiving position, the elongate portion is generally displaced from the resting position, such that the distance between the said distal end and said first surface is increased; wherein said operational section of said elongate portion has at least one recess (18, 29, 36), wherein said recess is dimensioned to provide a space for accommodating at least one finger of a user; wherein the recess is located remote from the attachment portion to enable the user to displace the elongate portion from said resting position to said receiving position using said at least one finger.

In a second aspect, there is provided a clip for a mobile communication device, comprising an attachment portion pivotally securable to said device; and an elongated portion configured to extend from said attachment portion and along said device, generally parallel thereto; wherein the outer section elongated portion is manufactured from a compressible material such that when a user inserts a finger between said elongated portion and said mobile communication device, said finger defines a recess in said elongated portion such that said elongated portion is spaced farther from said device at said recess than on either distal or proximal areas of said elongated portion relative to said recess.

In yet a further aspect, there is provided a mobile communication assembly, comprising a mobile communication device and a clip secured thereto, said clip comprising an attachment portion securable to or integral with said device; and an elongate portion, at least part of which defines a plane, the elongate portion comprising a distal end, remote from said attachment portion, and an operational section extending between the attachment portion and the distal end, and opposing a first surface of the device, such that in a rest position, the said plane of said elongate portion extends substantially parallel to or is inclined toward the said first surface of the device and in a receiving position the elongate portion is generally displaced from the rest position, such that the distance between the said distal end and said first surface is increased, said operational section of said elongate portion having at least one recess, wherein said recess is dimensioned to provide a space for accommodating at least one finger of a user, the recess being located sufficiently distant from the attachment portion to enable the user to displace the elongate portion from said rest position to said receiving position using one hand.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the invention will now be described, by way of example only, with reference to the attached Figures, wherein:
Figure 1a is a perspective view of a mobile communication device with an ergonomic clip in accordance with the invention.
Figure 1b is a rear view of the mobile communication device and clip of Figure 1a.
Figure 1c is a side view of the mobile communication device and clip of Figure 1a.
Figure 2a is a perspective view of a mobile communication device with a second embodiment of an ergonomic clip.
Figure 2b is a rear view of the mobile communication device and clip of Figure 2a.
Figure 2c is a side view of the mobile communication device and clip of Figure 2a.
Figure 3a is a perspective view of a mobile communication device with a third embodiment of an ergonomic clip.
Figure 3b is a rear view of the mobile communication device and clip of Figure 3a.
Figure 3c is a side view of the mobile communication device and clip of Figure 3a.
Figure 4a is a perspective view of a mobile communication device with a fourth embodiment of an ergonomic clip.
Figure 4b is a rear view of the mobile communication device and clip of Figure 4a.
Figure 4c is a side view of the mobile communication device and clip of Figure 4a.
   Figure 5a is a perspective view of a mobile communication device with a fifth embodiment of an ergonomic clip.
Figure 5b is a rear view of the mobile communication device and clip of Figure 5a.
Figure 5c is a side view of the mobile communication device and clip of Figure 5a.
Figure 6a is a perspective view of a mobile communication device with a sixth embodiment of an ergonomic clip.
Figure 6b is a rear view of the mobile communication device and clip of Figure 6a.
Figure 6c is a side view of the mobile communication device and clip of Figure 6a.

### DESCRIPTION OF PREFERRED EMBODIMENTS

Generally, the invention provides an ergonomic clip for a mobile communication device which enables the device to be set for one-handed use by an individual. Furthermore, when in use, the clip grips at least one of the user's fingers against the back of the device in order to assist the user in holding or grasping the mobile communication device.

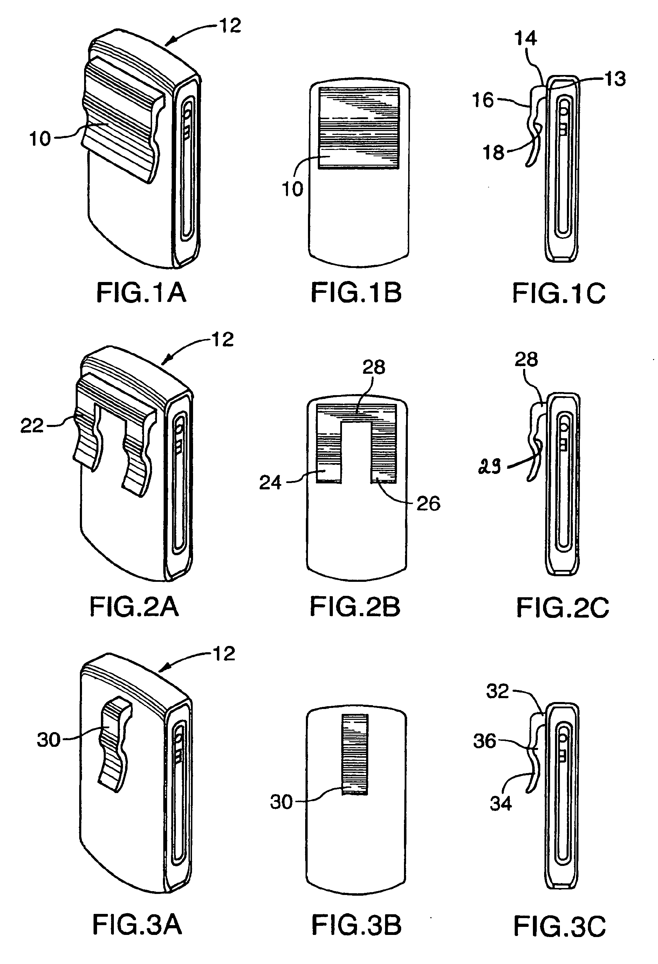

Turning to Figures 1 a to 1 c, a perspective view, a rear view and a side view, respectively, of a first embodiment of an ergonomic clip 10 attached to a mobile communication device 12 are provided. The clip 10 comprises an attachment portion 14, securable to the device 12, via a fastening means 13, and an elongated portion 16 configured to extend from the attachment portion 14 and along the rear of the device 12, generally parallel thereto. The elongated portion 16 has at least one recess 18, or pocket, defined in a device-facing surface, such that the elongated portion 16 is spaced farther away from the device 12 at the recess 18 than at positions of the elongated portion adjacent the recess 18. In this embodiment, the clip 10 is preferably manufactured out of plastic with the fastening means 13 between the clip 10 and the mobile communication device 12 comprising a spring so that the clip 10 may move away from the device 12 in order to engage a user's finger when the user inserts their finger into the recess 18. The elasticity of the fastening means 13 is selected so that the spring is loose enough for the user to insert their finger without having to use their second hand to assist in opening the clip 10 but stiff enough to apply enough pressure to hold the clip in place when the user is using the device 12 in order to provide one-handed use of the mobile communication device and to assist users in grasping the device.

The recess 18 provides a space for the user to insert a finger when the user wishes to use the device 12. The presence of the recess 18 allows the device 12 to be configured for one-handed use since the clip 10 grips the inserted finger against the back of the device 12. With respect to the recess 18, it will be understood by one skilled in the art that the recess size may be determined by a calculable formula which allows the recess to receive a finger of any size without causing discomfort to the user when the clip 10 grips the user's finger against the back of the mobile communication device 12.

When the mobile communication device 12 is not in use, the clip 10 may be used to snap on to the user's belt or pocket for storage.

In this embodiment, as shown in Figure 1 b, the width of the clip 10 substantially spans the width of the device 12 in order to provide a larger contact area between the clip 10 and the user's finger.

Turning to Figures 2a to 2c, a second embodiment of a clip 22 for use with a mobile communication device 12 is shown. In this embodiment, the clip 22 comprises a pair of elongated portion 24 and 26 which extend downward from an attachment portion 28 attached, via fastening means, to the device 12. The fastening means preferably include a spring which allows the clip 22 to be moved from a resting position to a receiving position when the user inserts a finger.

Recesses 29, or pockets, positioned in the two elongated portions 24 and 26, allow a user to comfortably insert their finger in order to assist the user in gripping the mobile communication device 12 when the mobile communication device is in use. When the user wishes to use the device 12, the user inserts a finger into the recesses 29, causing the grip to open away from the device 12, allowing the clip 22 to grip the user's finger at two points (the two recesses 29 in the elongated portions 24 and 26). The presence of dual recesses provides further support to the finger while it is held to the device. By allowing the individual to easily grip the mobile communication device 12 using one finger, the individual may then appreciate one-handed use of the mobile communication device 12 since there is little concern that the individual will drop the mobile communication device while the device is being used. The user may then use their thumb to type a message on the keypad of the mobile communication device or hold the device against their ear.

It will be understood that the pressure placed by the clip 22 on the user's finger is strong enough so that the clip 22 is not easily displaced but light enough to not cause injury to the individual's finger.

Turning to Figures 3a to 3c, a third embodiment of a clip 30 for use with a mobile communication device 12 is shown. In this embodiment, the clip 30 is centrally located in the back of the device 12. The clip 30 comprises an attachment portion 32, which is attached to the device 12 via fastening means (preferably hinged), along with an elongated portion 34. The elongated portion 34 includes a recess 36 which accepts a user's finger and grips the finger against the back of the device to enable the device 12 for one-handed use. Use of the recess 36 and the functionality of the clip 30 when the device is in use are described above with respect to the embodiments of Figures 1a to 1c and 2a to 2c.

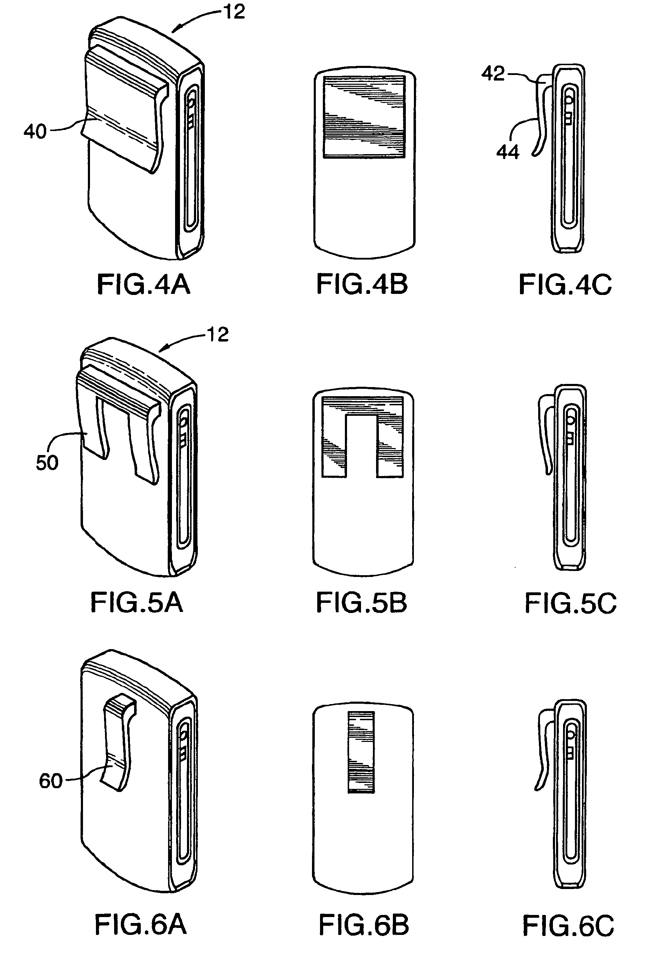

Turning to Figures 4a to 4c, a perspective view, a rear view and a side view, respectively, of a fourth embodiment of a clip 40 in accordance with an aspect of the invention are provided. In this embodiment, the clip 40 is attached to the mobile communication device 12 via an attachment portion 42 (which itself is preferably connected to the device via fastening means such as a spring) from which an elongated potion 44 extends, generally parallel to the back of the device 12. The elongated portion 44 of the clip 40 is manufactured from a soft rubber with a hard core allowing the clip to be manufactured without a recess and without affecting the comfort the user experiences when the clip is gripping the user's finger against the device. Therefore, the user still experiences a comfortable grip. The soft, compressive rubber allows for the user's fingers to be gripped by the clip without causing pain since the rubber preferably moulds itself against the contour of the user's finger. The soft rubber is preferably dynamic so that after the user's finger is removed, the clip returns to its original shape. The hard core provides the necessary shape to the clip 40 so that it does not become warped.

Turning to Figures 5a to 5c, a fifth embodiment of a clip in accordance with the invention is shown. The clip 50 is similar to the embodiment disclosed in Figures 2a to 2c. As with the embodiment disclosed in Figures 4a to 4c, the clip 50 is manufactured out of a soft rubber with a hard core so that recesses are not required. As before, the clip 50 is attached to the device via a hinged fastening means which allows the clip to be moved from the resting position to the receiving position.

Turning to Figures 6a to 6c, a sixth embodiment of a clip in accordance with the invention is shown. The clip 60 is similar in design to the embodiment disclosed in Figures 3a to 3c. As with the embodiment disclosed in Figures 4a to 4c, the clip 60 is manufactured out of a soft rubber with a hard core so that a recess is not required.

It will understood that although the clip has been described as being attached to the back of the device, the clip may either be manufactured with the mobile communication device or may be an snap-on attachment which may be manufactured separately.

Furthermore, although the device has been described with respect to a pocket or recess for receiving one finger, the pocket may be designed to receive multiple fingers.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A clip (10, 22, 30, 40, 50, 60) for a mobile communication device for facilitating one-handed handling of said mobile communication device by a user, comprising:
an attachment portion (14, 28, 32 42) securable to said device; and
an elongate portion (16, 24, 26, 34, 44), at least part of which defines a
plane,
comprising
a distal end, remote from said attachment portion, and
an operational section extending between the attachment portion and
the distal end, and opposing a first surface of the device;
wherein, in a resting position, the said plane of said elongate portion extends substantially parallel to or is inclined toward the said first surface of the device;
wherein, in a receiving position, the elongate portion is generally displaced from the resting position, such that the distance between the said distal end and said first surface is increased;
wherein said operational section of said elongate portion has at least one recess (18, 29, 36), wherein said recess is dimensioned to provide a space for accommodating at least one finger of a user;
wherein the recess is located remote from the attachment portion to enable the user to displace the elongate portion from said resting position to said receiving position using said at least one finger.

2. The clip of claim 1 wherein said attachment portion is pivotally secured to said device by means of a pivotal fastening means.

3. The clip of claim 2 wherein said pivotal fastening means is a hinge.

4. The clip of claim 2 or claim 3 wherein the pivotal fastening means further comprises a spring.

5. The clip of claim 1 wherein said attachment portion is non-pivotally secured by means of a non-pivotal fastening means.

6. The clip of any one of claims 1 to 5, wherein the attachment means maintains the elongate portion in said resting position, unless displaced by the user.

7. The clip of any of the claims 1 to 6 wherein said elongate portion is made of a resilient material.

8. The clip of any one of claims 1 to 6 wherein the said elongate portion has an inner core, which is made of a resilient material, and an outer section, which is made from a compressible material.

9. The clip of claim 8 wherein said compressible material is a soft rubber material.

10. A mobile communication assembly, comprising a mobile communication device and a clip according to any one of claims 1 to 9 secured thereto

11. The mobile communication assembly of claim 10, wherein said attachment portion is located adjacent an upper edge of said device.

12. The mobile communication assembly of claim 11, wherein said first surface of the device is the rear surface of the device.

## Patentansprüche

1. Eine Halterungsklemme (10, 22, 30, 40, 50, 60) für ein mobiles Kommunikationsgerät zur Vereinfachung der einhändigen Handhabung des mobilen Kommunikationsgeräts durch den Benutzer, bestehend aus:
einem Befestigungsabschnitt (14, 28, 32, 42), der am Gerät angebracht werden kann; und
einem Verlängerungsabschnitt (16, 24, 26, 34, 44), der zumindest
teilweise eine Ebene beschreibt,
bestehend aus
einem distalen Ende, das sich auf der dem Befestigungsabschnitt abgewandten Seite befindet, und
einem Bedienungsbereich, der sich zwischen dem Befestigungsbereich und dem distalen Ende sowie gegenüber einer ersten Fläche des Geräts befindet;
wobei in einer Ruhelage die Ebene des Verlängerungsabschnitts sich im wesentlichen parallel zur ersten Fläche des Geräts erstreckt oder zu dieser geneigt ist;
wobei in einer Empfangslage der Verlängerungsabschnitt im Allgemeinen gegenüber der Ruhelage verschoben ist, sodass sich der Abstand zwischen dem distalen Ende und der ersten Fläche vergrößert;
wobei der Bedienungsbereich des Verlängerungsabschnitts mit mindestens einer Aussparung (18, 29, 36) versehen ist, wobei diese Aussparung so bemessen ist, dass sie Platz für mindestens einen Finger eines Benutzers bietet;
wobei sich die Aussparung in einem gewissen Abstand vom Befestigungsabschnitt befindet, sodass der Benutzer den Verlängerungsabschnitt mit dem mindestens einen Finger aus der Ruhelage in die Empfangslage verschieben kann.

2. Die Halterungsklemme gemäß Anspruch 1, wobei der Befestigungsabschnitt mittels eines drehbaren Befestigungsmittels drehbar am Gerät angebracht ist.

3. Die Halterungsklemme gemäß Anspruch 2, wobei das drehbare Befestigungsmittel ein Gelenk ist.

4. Die Halterungsklemme gemäß Anspruch 2 oder Anspruch 3, wobei das drehbare Befestigungsmittel zudem eine Feder umfasst.

5. Die Halterungsklemme gemäß Anspruch 1, wobei der Befestigungsabschnitt mittels eines nicht drehbaren Befestigungsmittels nicht drehbar angebracht ist.

6. Die Halterungsklemme gemäß jedem der Ansprüche 1 bis 5, wobei das Befestigungsmittel den Verlängerungsabschnitt in der Ruhelage hält, sofern keine Verschiebung durch den Benutzer erfolgt.

7. Die Halterungsklemme gemäß jedem der Ansprüche 1 bis 6, wobei der Verlängerungsabschnitt aus einem elastischen Material besteht.

8. Die Halterungsklemme gemäß jedem der Ansprüche 1 bis 6, wobei der Verlängerungsabschnitt einen inneren Kern aus einem elastischen Material und einen äußeren Bereich aus einem kompressiblen Material aufweist.

9. Die Halterungsklemme gemäß Anspruch 8, wobei das kompressible Material ein Weichgummimaterial ist.

10. Eine Baueinheit für die mobile Kommunikation, die aus einem mobilen Kommunikationsgerät und einer daran angebrachten Halterungsklemme gemäß jedem der Ansprüche 1 bis 9 besteht.

11. Die Baueinheit für die mobile Kommunikation gemäß Anspruch 10, wobei sich der Befestigungsabschnitt neben einer oberen Kante des Geräts befindet.

12. Die Baueinheit für die mobile Kommunikation gemäß Anspruch 11, wobei die erste Fläche des Geräts die rückseitige Fläche des Geräts ist.

## Revendications

1. Pince (10, 22, 30, 40, 50, 60) pour dispositif de communication mobile permettant à un utilisateur de manipuler d'une seule main ledit dispositif de communication mobile, comportant :
une partie de fixation (14, 28, 32 42) pouvant être fixée audit dispositif ; et une partie allongée (16, 24, 26, 34, 44) dont au moins une partie définit un plan, comportant
une extrémité distale, distante de ladite partie de fixation, et
une section opérationnelle qui se prolonge entre la partie de fixation et l'extrémité distale et qui se trouve face à une première surface du dispositif ;
dans laquelle, à une position de repos, ledit plan de ladite partie allongée se prolonge sensiblement en parallèle à, ou est inclinée vers, ladite première surface du dispositif ;
dans laquelle, en position de réception, la partie allongée est généralement déplacée de la position de repos, de façon à augmenter la distance entre ladite extrémité distale et ladite première surface ;
dans laquelle ladite section opérationnelle de ladite partie allongée a au moins un renfoncement (18, 29, 36), ledit renfoncement étant dimensionné de façon à fournir un espace pour loger au moins un doigt d'un utilisateur ;
dans laquelle le renfoncement est situé à distance de la partie de fixation pour permettre à l'utilisateur de déplacer la partie allongée de ladite position de repos vers ladite position de réception au moyen dudit au moins un doigt.

2. Pince de la revendication 1 dans laquelle ladite partie de fixation est fixée de façon pivotante audit dispositif à l'aide d'un moyen de fixation pivotant.

3. Pince de la revendication 2 dans laquelle ladite fixation pivotante est une charnière.

4. Pince de la revendication 2 ou de la revendication 3 dans laquelle le moyen de fixation pivotant comporte en outre un ressort.

5. Pince de la revendication 1 dans laquelle ladite partie de fixation est fixée de façon non pivotante à l'aide d'un moyen de fixation non pivotant.

6. Pince de l'une quelconque des revendications 1 à 5 dans laquelle le moyen de fixation maintient la partie allongée à ladite position de repos à moins d'être déplacée par l'utilisateur.

7. Pince de l'une quelconque des revendications 1 à 6 dans laquelle ladite partie allongée est faite d'un matériau résistant.

8. Pince de l'une quelconque des revendications 1 à 6 dans laquelle ladite partie allongée possède un noyau interne fait d'un matériau résistant, et une section externe faite d'un matériau compressible.

9. Pince de la revendication 8 dans laquelle ledit matériau compressible est un matériau en caoutchouc souple.

10. Ensemble de communication mobile comprenant un dispositif de communication mobile et une pince conforme à l'une quelconque des revendications 1 à 9 fixée à celui-ci.

11. Ensemble de communication mobile de la revendication 10 dans lequel ladite partie de fixation est placée de façon adjacente à un bord supérieur dudit dispositif.

12. Ensemble de communication mobile de la revendication 11 dans lequel ladite première surface du dispositif est la surface arrière du dispositif.
